# EUROPEAN PATENT APPLICATION

(11) **EP 2 237 350 A1**
(43) Date of publication of application: **06.10.2010**
(21) Application number: 10166960.4
(22) Date of filing: 21.09.2005
(51) Int. Cl.: H01M 8/02, H01M 8/10, H01M 8/04

(54) **Use of an electrochemical cell such as a fuel cell**

(30) Priority: 03.03.2005 GB 0504460; 03.03.2005 GB 0504465; 21.09.2004 GB 0420961
(62) Divisional of application: 05784370.8
(71) Applicant: ITM Power (Research) Limited, Sheffield South Yorkshire S4 7QQ (GB)
(72) Inventor: Highgate, Donald James, Doking, Surrey RH5 6NS (GB); Bourne, Simon, Sheffield, South Yorkshire S9 1XU (GB); Scowcroft, Steven David, Sheffield, South Yorkshire S9 1XU (GB)
(74) Representative: Perry, Robert Edward

(57) **Abstract**

A method of performing an electrochemical reaction in an electrochemical cell comprising electrodes separated by an ion-exchange membrane, which comprises including a reactant that is capable of undergoing or imparting a change in visual appearance on oxidation or reduction; and monitoring any change in visual appearance.

## Description

### Field of the Invention

This invention relates to a method of performing an electrochemical reaction.

### Background to the Invention

WO03/23890 discloses that ion-exchange materials can be produced based on hydrophilic polymers, i.e. polymers which are inherently able to absorb and transmit water throughout their molecular structure. The materials are particularly relevant to hydrogen-oxygen fuel cells, since product water can be redistributed, thereby avoiding local flooding or drying-out of the membrane. There are essentially three ways in which a hydrophilic material can be rendered ionically conducting.

The first way is to form ionically active sites by co-polymerisation from a solution of ionically active monomers; this methodology is described in WO03/23890. A strongly anionic or cationic moiety is formed in the resulting polymer, allowing it to function as a anionic-exchange (AE) or cationic-exchange (CE) material respectively.

The second way is to incorporate ionically active sites, for example by sulphonation of an existing polymer molecule (an example of this is Nafion) or by grafting to an existing polymer film.

The third way is by hydration of the hydrophilic material in an acidic or alkaline liquid. Hydrophilic materials such as HEMA (2-hydroxyethyl methacrylate) and MMA-VP (methyl methacrylate-vinylpyrrolidone) possess no intrinsic electrical properties and, if hydrated in deionised distilled (DD) water, are good electrical resistors. If, however, these materials are hydrated in an acidic or alkaline solution, they become good conductors. A limitation of this approach is that conductivity declines as the electrolyte solution washes out, the material eventually becoming electrically inactive. Such washing out is particularly problematic in electrolysers, where reactant water is normally present in large quantities, and in hydrogen-oxygen fuel cells, where water is produced.

Sodium borohydride fuel cells are also known. Sodium borohydride fuel is normally stabilised using an alkaline solution, such as aqueous sodium hydroxide.

US58804329 and US5948558 describe fuel cells in which borohydride ions (BH₄⁻) are oxidised at the anode to produce an electrical current. The fuel is in the form of a solution of, for example, sodium borohydride. Similar types of cell are also disclosed in WO-A-02/00950 and WO-A-02/052664.

There are two ways in which borohydride ions may be oxidised. When acidic conditions are used, it is thought that the borohydride ions are oxidised to form hydrogen, which is then consumed (referred to herein as a "d-type" process). Under alkaline conditions, the borohydride ions are believed to be consumed directly, i.e. there is no intermediate production of hydrogen (referred to herein as a "D-type" process). The d-type pathway yields a lower voltage (approximately 1.2V) than the D-type pathway (approximately 1.6V), since some energy is used in the evolution of hydrogen.

Although the above publications refer to d- and D-type cells, there is little evidence to suggest that an efficient cell operating under either mechanism has been produced. Indeed, it seems that no-one has actually managed to run a D-type cell.

Similar problems have been encountered with alcohol-based fuel cells; efforts to date have struggled to attain a system which operates anywhere near its theoretical maximum voltage or at acceptable levels of power density.

Another problem is associated with the fact that the amount of fuel in a cell declines as the cell converts chemical energy into electrical energy. This depletion of fuel continues until the performance diminishes rapidly and the cell ultimately ceases to function. At this point, the cell must be refuelled. There is no advance warning of when fuel reserves are low.

### Summary of the Invention

In one aspect, the present invention addresses the limitations of the third approach to making a hydrophilic material conductive, and is based on the realisation that a doping material may be included in the fuel (or other oxidisable component) or the oxidant and may be acidic or alkaline; indeed, it has been found possible to incorporate an acidic material in one liquid (e.g. the oxidant) and simultaneously incorporate an alkaline material in the other liquid (e.g. the fuel). Similarly, the conductivity of a weakly ionic hydrophilic membrane can be augmented using such a fuel.

According to one aspect of the invention, a method of performing an electrochemical reaction in an electrochemical cell comprising electrodes separated by a hydrophilic membrane of low ionic conductivity, comprises introducing into the cell an aqueous solution comprising a fuel and or an oxidant either or both of which may contain an electrolyte, and oxidising the fuel in the presence of the electrolyte.

In another aspect, the present invention is based on the discovery that the AE membrane materials of WO03/23890 are a solution to the problems described above with respect to borohydride cells. In particular, it has been discovered that such materials, when used in conjunction with alkaline conditions, promote the D-type boronate oxidation mechanism.

In this aspect, a fuel cell comprises electrodes separated by an anionic exchange membrane, wherein the membrane comprises a hydrophilic polymer comprising a strongly anionic group, and wherein the fuel is a borohydride solution or an alcoholic solution. In particular, a voltage may be produced by oxidising a fuel in an electrochemical cell comprising electrodes separated by an anionic exchange membrane, wherein the membrane comprises a hydrophilic polymer comprising a strongly anionic group, and wherein the fuel is a borohydride solution or an alcohol.

The present invention is based also on a realisation that the fuel or an added reactant may be used to indicate, by way of a colour change, when refuelling or topping up is required. For example, a fuel or oxidant may undergo a colour change on reaction.

Accordingly, a further aspect of the present invention is a method of performing an electrochemical reaction in an electrochemical cell comprising electrodes separated by an ion-exchange membrane, which comprises including a reactant that is capable of undergoing or imparting a change in visual appearance on oxidation or reduction; and monitoring any change in visual appearance.

Another aspect of the invention is an electrochemical cell comprising electrodes separated by an ion-exchange membrane, wherein the cell comprises a liquid including a reactant that is capable of undergoing or imparting a change in visual appearance upon oxidation or reduction, and wherein the cell comprises a window through which the visual appearance of the liquid can be observed.

These aspects of the invention provide a simple, visual indicator of the life of a cell. In the particular case of a fuel cell, the quantity of fuel and oxidant may be controlled so that a colour change in at least one of the solutions provides sufficient indication that a top-up will soon be necessary.

### Description of Preferred Embodiments

The hydrophilic material may be ionically inactive, i.e. it possesses no intrinsic electrical properties. In this case, ionic activity is conferred to the material by the electrolyte. Alternatively, the hydrophilic material may be weakly ionically active, comprising anionic or cationic sites within its structure. Here, the aqueous electrolyte augments the ionic activity of the hydrophilic material. Weakly active materials are typically those which, when hydrated in DD water, exhibit ionic conductivities which are less than 60%, typically less than 50%, of that of an industry standard material such as Nafion 117.

Alternatively the membrane may be a composite structure comprised of a neutral component and/or an AE component and/or a CE component, as disclosed in PCT/GB2005/002356. One of the ionically active materials may optionally be an intrinsically strong ionic conductor.

The hydrophilic material may be obtained using any suitable method known in the art. For example, a weakly ionically active material may formed by according to the techniques described in WO03/23890, the contents of which are incorporated in by reference. The material is preferably a hydrophilic polymer, e.g. obtainable by the (co)polymerisation of monomers such as methyl methacrylate, acrylonitrile, N-vinyl-2-pyrrolidinone, [2-(acryloyloxy)ethyl]trimethylammonium chloride or [3-(methylacryloylamino)propyl]trimethylammonium chloride, and is preferably cross-linked. For example, an AE material is preferably a copolymer of hydrophilic and hydrophobic monomers, preferred monomers including acrylonitrile, 1-vinyl-2-pyrrolidinone, hydroxyethyl methacrylate and methyl methacrylate. Preferably, the strongly anionic group is or is derived from [3-(methylacryloyamino)propyl]trimethylammonium chloride, [2-(acryloyloxy)ethyl]trimethylammonium chloride, sodium hydroxide or potassium hydroxide. Particularly preferred AE materials are those disclosed in Table 1 of this specification.

By way of example, the solution may comprise a reactant such as a liquid fuel or oxidant. Suitable fuels include alcohols (e.g. methanol and ethanol) and borohydrides (e.g. sodium borohydride). An example of a liquid oxidant is hydrogen peroxide. Another is KMnO₄.

The fuel or other oxidisable component (e.g. if the cell is used as an electrolyser) may be gaseous but is preferably liquid, and it may be desirable that the system is not compressible. The presence of water allows fuel and/or oxidant to be carried into the hydrophilic membrane.

The electrolyte may be acidic or alkaline. Examples of suitable electrolytes include toluenesulphonic acid (TSA), vinylsulphonic acid, acrylamido-(2-methyl)propanesulphonic acid (AMPSA), sodium hydroxide or potassium hydroxide. When the reactant is an alcohol or a borohydride, it is preferred that the electrolyte is an alkali, such as sodium or potassium hydroxide. The concentration of electrolyte required will be apparent to those skilled in the art, and can be controlled, for example, by controlling input into the cell.

It will be appreciated that, when the fuel is a borohydride solution, the cell may operate *via* the d- or D-type mechanism, depending on the conditions employed. The d-type mechanism may be effected by simply using a platinum catalyst at the anode. For a D-type system, it is preferred that a gold catalyst is used, and that the borohydride solution is an alkaline solution, preferably containing potassium hydroxide or sodium hydroxide.

When the fuel is an alcoholic fuel, then it is preferred that the alcohol is methanol or ethanol, preferably in an alkaline solution. Suitable fuels may be stabilised by the presence of acid or alkali. For example, a fuel may be stabilised with alkali, on one side of the membrane, and/or an oxidant may be stabilised with acid, on the other. More generally, however, liquids on either or both sides of the membrane may be acidic or alkaline.

If one of the electrolyte and the fuel is charged, the cell acts as if it comprised a simple acid or alkali membrane. If both are charged, the effect is composite.

As indicated above, an aspect of the invention involves a colour change. The reactant which can undergo a change in colour may be a liquid fuel. An alcoholic fuel such as aqueous methanol or ethanol is oxidised to form *inter alia* carbon dioxide. A solution of an alcohol and calcium hydroxide will become cloudy as the fuel is oxidised, since the carbon dioxide produced reacts with calcium hydroxide to form calcium carbonate. Thus, the change in colour is, in such a case, a change in opacity.

Alternatively or additionally, the reactant may be an oxidant which is typically presented as a liquid. An alkaline solution of potassium permanganate, when oxidised, changes from purple to green, as manganate ions are formed. If the solution is acidic, a colourless solution results. It will be appreciated that the reactant may itself change colour or cause a colour change *in situ.*

The fuel cell may be in the form of a membrane-electrode assembly (MEA) or a stack of MEAs. Methods for the production of such devices are disclosed in WO-A-03/23890.

The following Examples illustrate the invention.

### Materials

Abbreviations and materials used herein are:
acrylonitrile (AN)
1-vinyl-2-pyrrolidinone (VP)
hydroxyethyl methacrylate (HEMA)
methyl methacrylate (MMA)
[3-(methylacryloylamino)propyl]trimethylammonium chloride (BA)
[2-(acryloyloxy)ethyl]trimethylammonium chloride (BN)
dimethylaminoethyl acrylate (BE)
vinylbenzyl trimethylammonium chloride (BV)
sodium hydroxide (BS)
potassium hydroxide (BP)
HPLC-grade water (R)
allyl methacrylate (X)
azobisisobutyronitrile (Z)

Twelve AE membrane materials were produced, having a variety of alkaline moieties permanently polymerised in the material. The AE materials had the following constituents:

**Table 1**

| **Sample No.** | **VP** | **AN** | **HEMA** | **MMA** | **BV** | **BE** | **BA** | **BN** | **X** | **R** | **Z** |
|---|---|---|---|---|---|---|---|---|---|---|---|
| **1g** | 70.67 | 70.67 | | | | 28.39 | | | 1.89 | 28.39 | |
| **1t** | 69.76 | 69.76 | | | | 27.90 | | | 1.86 | 27.90 | 2.80 |
| **2g** | 70.67 | | 70.67 | | 28.39 | | | | 1.89 | 28.39 | |
| **2t** | 69.76 | | 69.76 | | 27.90 | | | | 1.86 | 27.90 | 2.80 |
| **3g** | 70.67 | | 70.67 | | | 28.39 | | | 1.89 | 28.39 | |
| **3t** | 69.76 | | 69.76 | | | 27.90 | | | 1.86 | 27.90 | 2.80 |
| **4g** | 70.67 | | 70.67 | | | | 56.78 | | 1.89 | | |
| **4t** | 69.76 | | 69.76 | | | | 55.80 | | 1.86 | | 2.80 |
| **5g** | 70.67 | | | 70.67 | | | | 34.07 | 1.89 | 22.7 | |
| **5t** | 69.76 | | | 69.76 | | | | 34.86 | 1.86 | 20.92 | 2.80 |
| **6g** | 70.67 | | | 70.67 | | 28.39 | | | 1.89 | 28.39 | |
| **6t** | 69.67 | | | 69.67 | | 27.90 | | | 1.86 | 27.90 | 2.80 |

In Table 1, the suffixes "g" and "t" refer to curing by gamma irradiation and by heat respectively. All units are in grams.

### Example 1: d-type borohydride fuel cell

A sample of material 5g, hydrated in 2 M potassium hydroxide solution, was used as the membrane for a borohydride fuel cell. The cell had the following properties and components:

| | |
|---|---|
| active area | 3.142 cm² |
| anode/cathode catalyst | Pt Black, 5 mg/cm² Nafion solution treated (Lynntech) |
| electrode | 0.35 mm ELAT graphitised carbon cloth |
| current collector | 0.85 mm stainless steel mesh |

A fuel solution was prepared by dissolving 1 g of sodium borohydride in 100 g of water. After 15 minutes, small bubbles could be seen on the sides of the mixing vessel. These were assumed to have resulted from the slow evolution of hydrogen.

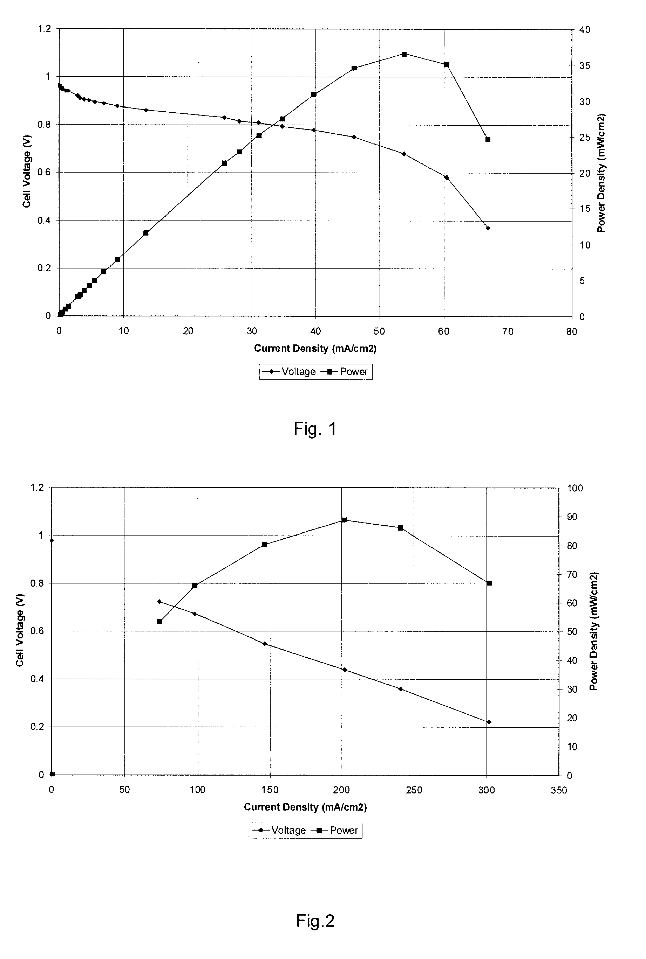

Approximately 10 ml sodium borohydride solution was then introduced directly into the anode chamber of the fuel cell. Oxygen was supplied to the cathode chamber. Neither the fuel nor oxidant was circulated. The open circuit voltage climbed quickly to 0.9495 V. The cell was then subjected to a series of short circuit tests through a range of different resistances before undergoing a polarisation test. The results are shown in Fig. 1 and Table 2.

**Table 2**

| Resistance (Ω) | Max Current Density (mA/cm²) | Min Voltage (V) | Power Density (mW/cm²) |
|---|---|---|---|
| 0.5 | 207.2 | 0.4637 | 96.1 |
| 0.3 | 241.0 | 0.4085 | 98.4 |
| 0 (a) | 314.4 | 0.2731 | 85.9 |
| 0 (b) | 321.0 | 0.2509 | 80.5 |
| 0 (c) long | 320.1 | 0.2477 | 79.3 |

The cell showed higher than expected performance. A maximum power density of 36.6 mW/cm² at 53.8 mA/cm² was recorded during polarisation and a transient of 98.4 mW/cm² at 241 mA/cm². The voltage profile of the polarisation curve shows the three characteristic regions often referred to as (i) kinetic, (ii) resistive, and (iii) mass transport-limited. Of particular interest is the mass transport region characterised by a trail-off in voltage at higher current densities.

A second series of short circuit tests was conducted. These were designed to reveal more of the transient power response at higher current densities. Quick short circuit tests such as these are presumed to utilise fuel which is already present at the membrane surface and as such do not rely on further fuel to permeate through the current collector and electrode structures.

The results are shown in Fig. 2. Each of the data points was obtained from independent rapid testing, the open circuit voltage being allowed to climb back to 0.9 V before the next test was conducted. The open circuit voltage after this round of tests was 0.9793 V.

During these tests small bubbles of what was presumed to be hydrogen could be seen slowly forming in the anode chamber. This suggested that the fuel cell, despite being fed directly with sodium borohydride solution, was actually running on hydrogen being produced at the anode catalyst.

A sample of material 5g, pre-treated in 2 M sodium hydroxide, was then prepared and used in place of the existing membrane in the cell. This appeared to have a positive effect on the current and power densities. On first supplying the fuel to the cell, the open circuit voltage rose quickly to 0.921 V. A series of short circuit tests were conducted to evaluate transient power response. The largest current drawn from the cell was over 1.5 A, which equates to 478.9 mA/cm². The maximum transient power density was 136.7 mW/cm² at 307.4 mA/cm².

### Example 2: D-type borohydride fuel cell

A fuel cell similar to that of Example 1 was used, having an anode catalyst which was a gold mesh of the following specification:

| | |
|---|---|
| purity | 99.99% |
| wire diameter | 0.060 mm |
| aperture size | 0.25 mm |
| open area | 65%. |

Membrane materials 4g and 6g were tested. The fuel used was 10 wt% sodium borohydride in 2 M sodium hydroxide solution.

The maximum open circuit voltage (OCV) achieved using material 4g was 1.5182. An OCV of 1.5296 was attained using material 6g. These results suggest that the alkaline nature of the hydrophilic membrane materials prevented "runaway" hydrogen evolution. Coupling this environment with a gold catalyst proved sufficient to oxidise sodium borohydride directly, i.e. *via* the D-type mechanism.

### Example 3: alcohol fuel cell

A fuel cell was designed to enable the evaluation of the materials of Example 1 with methanol and ethanol fuels. The cell had the following characteristics:

| | |
|---|---|
| active area | 3.142 cm² |
| anode catalyst | Pt:Ru Black, 5 mg/cm² Nafion solution treated (Lynntech) |
| cathode catalyst | Pt Black, 5 mg/cm² Nafion solution treated (Lynntech) |
| electrode | ELAT graphitised carbon cloth, nominally 0.35 mm thick |
| current collector | stainless steel mesh, nominally 0.85 mm thick |

The anode of the cell was fed in turn with a range of fuels, including hydrogen. This was achieved by attaching short silicone hoses to the anode feed and exhaust ports and injecting the liquid fuels directly with a syringe. Where air was used as an oxidant, the cathode chamber was left open to the atmosphere. Where hydrogen and oxygen were used, they were supplied by a small electrolyser at very slightly above atmospheric pressure. Neither fuel nor oxidant was circulated. All tests were conducted at room temperature.

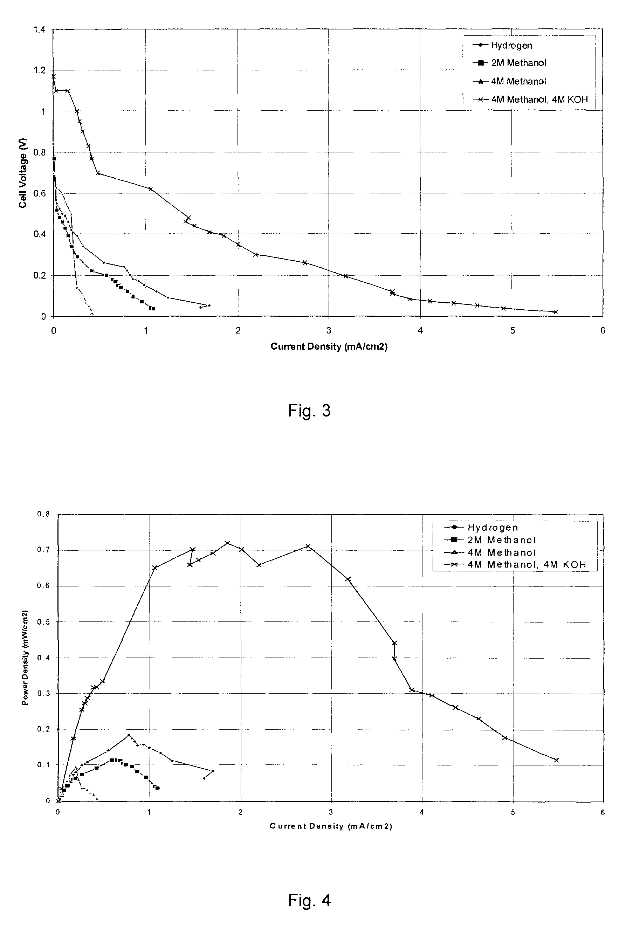

A polarisation curve was recorded for each system, and where possible the cell was short-circuited to enable a maximum transient current density to be measured. The results are shown in Figs. 3 and 4, and Table 3.

**Table 3**

| Fuel | Oxidant | Max OCV (V) | Max power density (mW/cm²) | Current density @ max power (mA/cm²) | Max sustainable current density (mA/cm²) | Max transient current density (mA/cm²) |
|---|---|---|---|---|---|---|
| Hydrogen | Oxygen | 0.86 | 0.18 | 0.76 | 1.69 | 3.72 |
| 2M Methanol | Oxygen | 0.77 | 0.13 | 0.31 | 1.08 | 5.70 |
| 2M Methanol | Air | 0.49 | 0.04 | 0.13 | 0.29 | - |
| 4M Methanol | Oxygen | 0.705 | 0.10 | 0.32 | 0.41 | 2.42 |
| 4M Methanol 4M KOH | Oxygen | 1.175 | 0.72 | 1.85 | 5.48 | 72.93 |

It is clear that the cells tested functioned successfully on all fuels. The addition of potassium hydroxide to the fuel resulted in the largest increase in performance, power density being boosted by a factor of seven. The open circuit voltage of 1.175 V is extremely high and is close to the theoretical maximum of 1.21 V attainable for methanol fuel.

Direct methanol-fed (DMF) cells were also run using materials 2g, 4g and 5g, and direct ethanol-fed (DEF) cells were run using materials 4g and 5g. In both modes, significant performance was achieved by pre-treating the AE samples in an alkaline solution such as 2 M sodium hydroxide or potassium hydroxide solution.

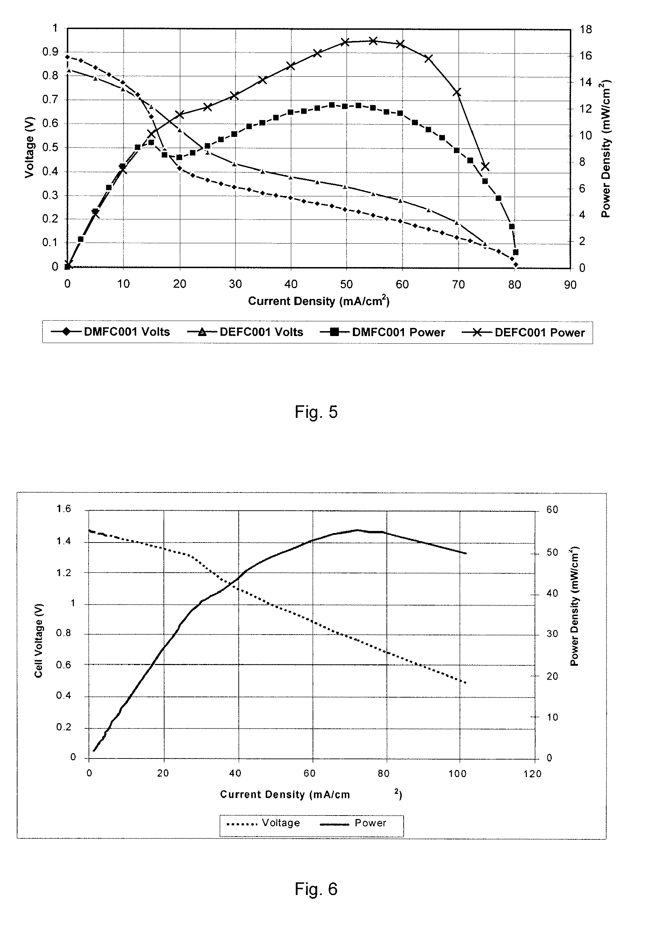

Fig. 5 shows the results obtained from a fuel cell utilising AE sample 4g hydrated in 2 M sodium hydroxide when fed with methanol and ethanol-based fuels in turn. The methanol-fed cell had a power density of 12 mW/cm² at 52 mA/cm². The ethanol-fed cell had a power density of 17 mW/cm² at 54 mA/cm².

Further testing of an ethanol fed cell utilising AE 4g with various treatments, produced the results shown in Table 4.

**Table 4**

| Sample | Fuel | Oxidant | Max OCV | Max current density polarisation (mA/cm²) | Max current density transient (mA/cm²) | Max power density polarisation (mW/cm²) | Max power density transient (mW/cm²) |
|---|---|---|---|---|---|---|---|
| i4ghR | 2M Ethanol | Air | 0.6295 | 2.36 | 16.01 | 0.45 | 2.31 |
| i4ghR | 2M Ethanol | Oxygen | 0.6388 | 2.77 | 15.37 | 0.47 | 2.37 |
| i4ghR | 2M Ethanol, 2M NaOH | Oxygen | 0.7230 | 8.72 | 52.26 | 1.48 | 6.96 |
| i4gh2Na | 2M Ethanol, 2M NaOH | Oxygen | 0.8808 | 92.65 | 322.50 | 15.15 | 63.95 |

### Further Materials

Four hydrophilic membrane materials (A to D) were produced according to the techniques described in WO03/23890. The composition of each material is shown below, in Table 5. Materials A and B are weakly ionically active AE materials, owing to the low concentration of trimethylammonium chloride solutions used in their manufacture. Materials C and D are ionically inactive.

**Table 5**

| Ingredient | **A** | **B** | **C** | **D** |
|---|---|---|---|---|
| 1-vinyl-2-pyrrolidinone | 70.67 | 70.67 | 0.00 | 100.00 |
| Acrylonitrile | 0.00 | 0.00 | 0.00 | 100.00 |
| Hydroxyethyl methacrylate | 70.67 | 70.67 | 100.00 | 0.00 |
| Methyl methacrylate | 0.00 | 0.00 | 0.00 | 0.00 |
| [2-(Acryloyloxy)ethyl]trimethylammonium chloride (80%) | 0.00 | 35.38 | 0.00 | 0.00 |
| (3-(Methylacryloylamino)propyl)trimethyl- | 56.60 | 0.00 | 0.00 | 0.00 |
| ammonium chloride (50%) | | | | |
| Allyl methacrylate | 1.89 | 1.89 | 0.00 | 2.00 |
| HPLC water | 0.00 | 21.22 | 10.00 | 0.00 |

### Example 4

A fuel cell comprising membrane material A was run on 2 M ethanol. The same cell was then run using 2 M ethanol doped with 2 M NaOH. As Table 6 shows, the performance of the cell was improved by adding 2 M NaOH to the fuel.

**Table 6**

| **Fuel** | **Oxidant** | **Open circuit voltage (V)** | **Max current density polarisation (mA/cm²)** | **Max current density transient (mA/cm²)** | **Max power density polarisation (mW/cm²)** | **Max power Density transient (mW/cm²)** |
|---|---|---|---|---|---|---|
| 2M EtOH | Oxygen | 0.6388 | 2.77 | 15.37 | 0.47 | 2.37 |
| 2M EtOH, 2M NaOH | Oxygen | 0.7230 | 8.27 | 52.26 | 1.48 | 6.96 |

### Example 5

A fuel cell comprising membrane material B was run using three different fuels: hydrogen gas, 4 M methanol and 4 M methanol doped with 4 M KOH. In all cases, the oxidant was oxygen. It is clear from Table 7 that the addition of KOH to the methanol fuel had a positive impact on performance.

**Table 7**

| **Fuel** | **Oxidant** | **Open circuit voltage (V)** | **Max current Density polarization (mA/cm²)** | **Max current density transient (mA/cm²)** | **Max power density polarisation (mW/cm²)** |
|---|---|---|---|---|---|
| Hydrogen | Oxygen | 0.860 | 1.69 | 3.72 | 0.18 |
| 4M MeOH | Oxygen | 0.705 | 0.41 | 2.24 | 0.1 |
| 4M MeOH, 4M KOH | Oxygen | 1.175 | 5.48 | 72.93 | 0.7 |

### Example 6

A 4 M methanol fuel cell comprising membrane material C yielded a peak power density of 0.0006875 mW/cm², i.e. effectively nothing. A similar result was achieved using material D. The addition of NaOH to the fuel had a dramatic impact on performance, resulting in a peak power density of over 1 mW/cm², a peak current density of 9.8 mA/cm² and a transient peak current density of 30 mA/cm².

### Example 7

A fuel cell comprising an anionic SPE was supplied with 1 wt% sodium borohydride solution (fuel) doped with 2 M potassium hydroxide, and 1 wt% potassium permanganate solution (oxidant) doped with 2 M potassium hydroxide.

The polarisation data are shown in Fig. 6. The cell achieved an OCV of 1.5 V. The oxidant solution was purple in colour but eventually began to change to green, indicating that refuelling or a top-up would soon be necessary. The change in colour is attributable to manganate ions, formed by reduction of permanganate ions.

### Example 8

A fuel cell comprising a cationic SPE was run on 1 wt% sodium borohydride solution (fuel) and 1 wt% potassium permanganate solution (oxidant) doped with 0.1 M sulphuric acid.

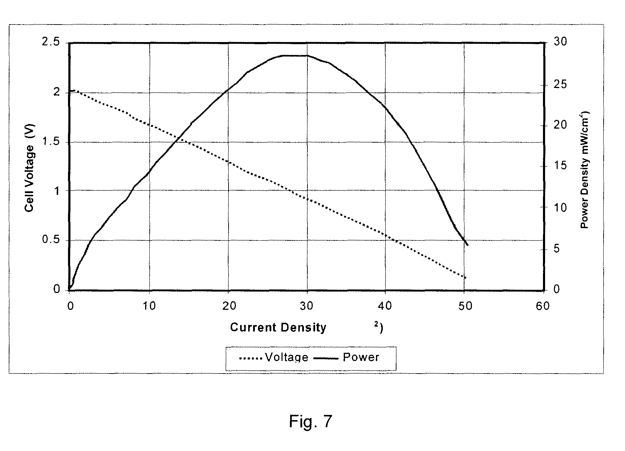

The polarisation data are shown in Fig. 7. The cell achieved an OCV of 2 V. The oxidant solution changed from purple to colourless, providing an advanced warning of the need to refuel or top up.

### Example 9

A fuel cell comprising an anionic SPE was run on 2 M methanol solution (fuel) doped with calcium hydroxide solution and 1 wt% hydrogen peroxide solution (oxidant).

The fuel changed from clear to cloudy, providing an advanced warning of the need to refuel or top up. The change in opacity is attributable to calcium carbonate, which is formed from the reaction of calcium hydroxide and carbon dioxide, the latter being a product of the oxidation of methanol.

## Claims

1. A method of performing an electrochemical reaction in an electrochemical cell comprising electrodes separated by an ion-exchange membrane, which comprises including a reactant that is capable of undergoing or imparting a change in visual appearance on oxidation or reduction; and monitoring any change in visual appearance.

2. A method according to claim 1, wherein the reactant is or is present in a fuel.

3. A method according to claim 2, wherein the fuel is an alcohol.

4. A method according to claim 3, wherein the alcohol is present in an aqueous solution comprising calcium hydroxide.

5. A method according to claim 3 or claim 4, wherein the alcohol is methanol or ethanol.

6. A method according to any of claims 1 to 5, wherein the reactant is an oxidant.

7. A method according to claim 6, wherein the oxidant is aqueous potassium permanganate.

8. A method according to any of claims 1 to 7, wherein the cell is in the form of a membrane-electrode assembly (MEA) or a stack of MEAs.

9. An electrochemical cell comprising electrodes separated by an ion-exchange membrane, wherein the cell comprises a liquid including a reactant that is capable of undergoing or imparting a change in visual appearance upon oxidation or reduction, and wherein the cell comprises a window through which the visual appearance of the liquid can be observed.

10. A cell according to claim 9, wherein the reactant, fuel and/or cell is as defined in any of claims 2 to 8.
